## Europäisches Patentamt

## European Patent Office

## Office européen des brevets

(19)

(11) Veröffentlichungsnummer : **0 030 931**
**B1**

(12)

# EUROPÄISCHE PATENTSCHRIFT

(45) Veröffentlichungstag der Patentschrift :
**11.05.83**

(51) Int. Cl.³ : **B 29 D 12/00, B 29 F 1/10**

(21) Anmeldenummer : **80890138.3**

(22) Anmeldetag : **26.11.80**

(54) **Verfahren zum Herstellen von Werkstücken, insbesondere von Brillenbügeln.**

(30) Priorität : **13.12.79 AT 7856/79**

(43) Veröffentlichungstag der Anmeldung :
**24.06.81 Patentblatt 81/25**

(45) Bekanntmachung des Hinweises auf die Patenterteilung : **11.05.83 Patentblatt 83/19**

(84) Benannte Vertragsstaaten :
**BE CH DE FR GB IT LI LU NL SE**

(56) Entgegenhaltungen :
**DE A 2 101 245**
**DE A 2 342 314**
**DE A 2 425 019**
**DE C 130 061**

(73) Patentinhaber : **A. Schmied Silhouette-Modellbrillen**
**Fabrikationsgesellschaft m.b.H.**
**Ellbognerstrasse 24**
**A-4021 Linz (AT)**

(72) Erfinder : **Gärtner, Johann**
**Raabwiesenstrasse 14**
**A-4060 Leonding (AT)**

(74) Vertreter : **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher Spit-**
**telwiese 7**
**A-4020 Linz (AT)**

Jouve, 18, rue St-Denis, 75001 Paris, France

Verfahren zum Herstellen von Werkstücken, insbesondere von Brillenbügeln

Die Erfindung bezieht sich auf ein Verfahren zum Herstellen von Werkstücken, insbesondere von Brillenbügeln, aus Kunststoff mit einer Metalleinlage, die in eine Form eingelegt, an einem Ende eingespannt und während des Füllens der Form mit Kunststoff in dem dem eingespannten Ende gegenüberliegenden Bereich in der gewünschten Lage gehalten wird, wobei diese Halterung zum vollständigen Umgeben der Metalleinlage mit Kunststoff entfernt wird.

Bei der Herstellung von Brillenbügeln, aber auch von allen anderen Werkstücken, die eine nicht an beiden Enden aus dem Kunststoff vorragende, biegsame Metalleinlage aufweisen, ergeben sich Schwierigkeiten, die einseitig eingespannte Metalleinlage während des Füllens der Form mit Kunststoff in der gewünschten Lage festzuhalten, weil die nicht biegesteife Metalleinlage durch den in die Form eindringenden Kunststoff aus der vorgesehenen Lage verdrängt wird. Obwohl das Herstellen von Brillenbügeln im Spritzgießverfahren die technisch beste Lösung darstellt, kann sich auf Grund der angeführten Schwierigkeiten das Umspritzen der Metalleinlage mit Kunststoff nicht durchsetzen. Um die Metalleinlage in der erforderlichen Lage innerhalb der Form festzuhalten, sind nämlich aufwendige Maßnahmen erforderlich, die trotzdem nicht befriedigen können. So ist es beispielsweise bekannt (DE-A-2 101 245), die Metalleinlage in einer Führungsausnehmung eines Schiebers zu lagern, der durch den in die Form eindringenden Kunststoff verschoben wird. Nachteilig bei diesem bekannten Verfahren ist jedoch, daß wegen des in der Form verschiebbar geführten Schiebers nur der Umrißform des Schiebers entsprechende Querschnittsformen des Werkstückes erhalten werden können, so daß das Werkstück im allgemeinen erst aus diesen Rohlingen gefräst oder gestanzt werden muß.

Der Erfindung liegt demnach die Aufgabe zugrunde, ein Verfahren der eingangs geschilderten Art so zu verbessern, daß die Metalleinlage in der Form während des Einbringens des Kunststoffes in der gewünschten Lage festgehalten werden kann, und zwar unabhängig von der jeweiligen geometrischen Gestalt der Form bzw. des Werkstückes, so daß eine besondere Nacharbeitung des entformten Werkstückes unnötig wird.

Die Erfindung löst die gestellte Aufgabe dadurch, daß die Metalleinlage in dem dem eingespannten Ende gegenüberliegenden Bereich mit wenigstens einem aus der Form herausführenden Zugelement verbunden und die Verbindungsstelle zwischem dem Zugelement und der Metalleinlage als Solltrennstelle mit einer begrenzten Zug- oder Torsionsfestigkeit ausgebildet ist, daß die Metalleinlage während des Einbringens des Kunststoffes in die Form über das Zugelement einer Zugspannung unterworfen wird, die kleiner als die Zugfestigkeit der Verbindungsstelle ist, und daß zum Lösen der Verbindungsstelle entweder die aufgebrachte Zugspannung über die Zugfestigkeit der Verbindungsstelle erhöht oder das Zugelement bis zum Überschreiten der Torsionsfestigkeit der Verbindungsstelle gedreht wird, bevor das Zugelement zum völligen Umgeben der Metalleinlage mit Kunststoff aus der Form gezogen wird.

Durch die Verbindung der Metalleinlage mit einem Zugelement, das aus der Form herausgeführt ist, kann die Metalleinlage ohne Abstützung gegenüber der Formwand durch das Aufbringen einer entsprechenden Zugspannung in der gewünschten Lage innerhalb der Form festgehalten werden, so daß die Lagefixierung der Metalleinlage tatsächlich unabhängig von der geometrischen Gestalt der Form sichergestellt ist. Es muß jedoch dafür gesorgt werden, daß das Zugelement nicht mit der Metalleinlage im Kunststoff verbleibt, sondern aus der Form herausgezogen wird, bevor die Füllung der Form mit Kunststoff beendet ist. Zu diesem Zweck ist die Verbindungsstelle zwischen dem Zugelement und der Metalleinlage als Solltrennstelle mit einer begrenzten Zugfestigkeit ausgebildet, so daß bei einer Zugspannung, die über der Zugfestigkeit der Verbindungsstelle liegt, die Verbindung zwischen dem Zugelement und der Metalleinlage an der Solltrennstelle aufgebrochen wird. Damit ist es in einfacher Weise möglich, das Zugelement von der Metalleinlage ohne Eingriff in das Forminnere von außen zu trennen, ohne die Lage der Metalleinlage zu verändern. Kurz vor Beendigung der Füllung der Form mit Kunststoff braucht folglich nur die Zugspannung auf das Zugelement entsprechend erhöht zu werden, um das Aufbrechen der Verbindung zwischen dem Zugelement und der Metalleinlage an der vorgesehenen Solltrennstelle zu erreichen und das Herausziehen des Zugelementes aus der Form zu ermöglichen. Der nachdrängende Kunststoff füllt dann die Form völlig aus, wobei die Gefahr einer Verlagerung der Metalleinlage nicht mehr gegeben ist, weil ja die Metalleinlage bereits durch den in die Form eingebrachten Kunststoff umschlossen und festgehalten wird.

Um die Verbindung zwischen der Metalleinlage und dem Zugelement einfach lösen zu können, könnte diese Verbindung auch eine begrenzte Torsionsfestigkeit aufweisen, so daß das Zugelement entsprechend um seine Achse gedreht werden müßte, um es von der Metalleinlage zu trennen.

Obwohl es selbstverständlich möglich ist, das Zugelement an der Metalleinlage anzuklemmen, anzukleben oder anzuschweißen, ergibt sich insbesondere bei draht- oder stabförmigen Metalleinlagen eine einfache Herstellung, wenn das Zugelement über eine Schwachstelle einstückig an der Metalleinlage angeformt ist, weil bei einer solchen Ausführungsform die Metalleinlage zugleich mit dem Zugelement hergestellt werden kann. Um die Metalleinlage an einer Verlagerung während des Einspritzens oder Eingießens des Kunststoffes in die Form hindern zu können, muß naturgemäß auf die Metalleinlage eine bestimmte Zugspannung einwirken können, die aber nicht zum Auftrennen der Verbindungsstelle führen darf. Die Verbindungsstelle zwischen Zugelement und Metalleinlage muß daher eine vorgegebene Mindestzugfestigkeit aufweisen. Diese Mindestzugfestigkeit kann am einfachsten dadurch sichergestellt werden, daß die Schwachstelle zwischen Zugelement und Metalleinlage durch eine Einschnürung gebildet wird, was den zusätzlichen Vorteil ergibt, daß die Gestalt der Metalleinlage im Bereich der Trennstelle nach dem Abtrennen des Zugelementes weitgehend vorgegeben ist.

An Stelle einer Einschnürung könnte die Schwachstelle beispielsweise durch ein Weichglühen hergestellt werden, wodurch die Festigkeit ebenfalls verringert wird. Die Sicherstellung einer bestimmten Mindestfestigkeit ist bei derartig ausgebildeten Schwachstellen jedoch schwieriger.

Von Vorteil ist es schließlich, wenn nach dem Zurückziehen des Zugelementes aus der Form das abgetrennte Ende des Zugelementes die Durchtrittsöffnung des Zugelementes in der Form bündig abschließt, weil durch diesen bündigen Abschluß der Form jeder unerwünschte Kunststoffansatz am Formling durch das Eindringen von Kunststoff in die Durchtrittsöffnung vermieden wird.

An Hand der Zeichnung wird das erfindungsgemäße Verfahren näher erläutert. Es zeigen

Figur 1 eine Form zum Herstellen von Brillenbügeln nach dem erfindungsgemäßen Verfahren in Draufsicht auf eine Formhälfte,

Figur 2 einen Vertikalschnitt durch eine solche Form,

Figur 3 die Verbindung zwischen einer Metalleinlage und einem Zugelement in Seitenansicht in einem größeren Maßstab und

Figur 4 ein Blockschaltbild der Steuerung der in den Fig. 1 und 2 dargestellten Vorrichtung.

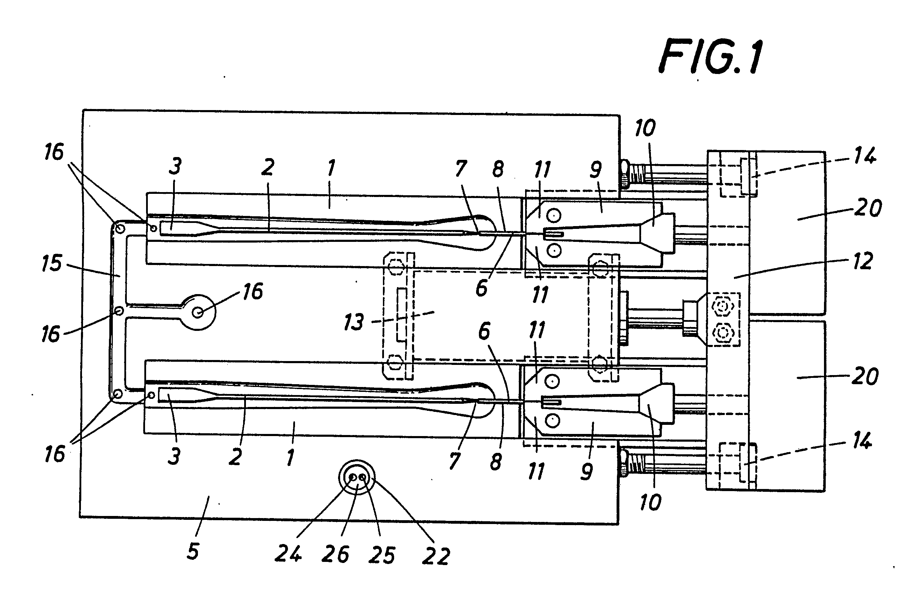

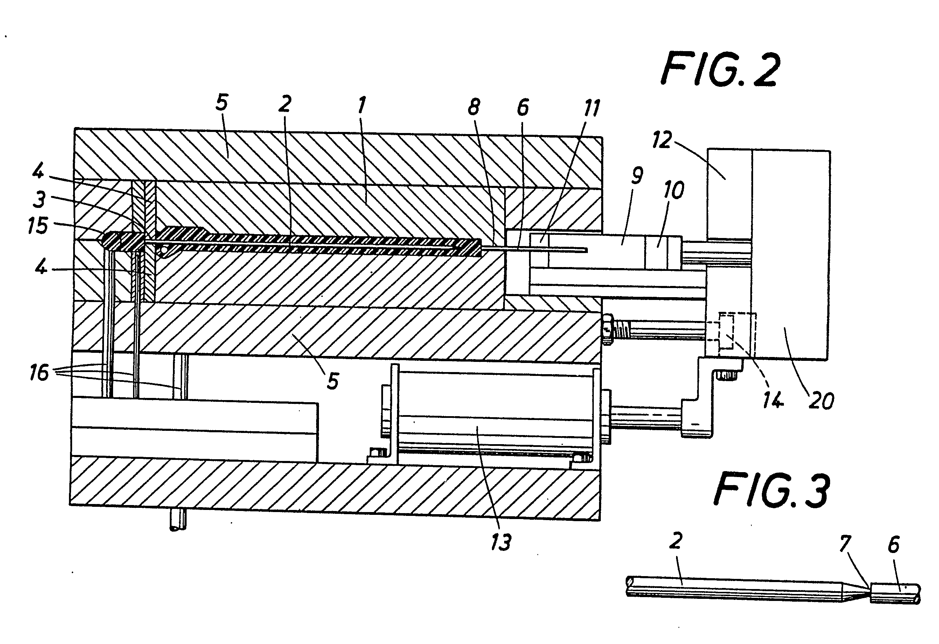

Zur Herstellung von Brillenbügeln sind gemäß den Fig. 1 und 2 Formen 1 vorgesehen, die in üblicher Weise aus zwei Formhälften bestehen. In diese Formen 1 werden die Metalleinlagen 2 eingelegt und an ihrem einen Ende 3 eingespannt. Zu diesem Zweck sind zwei Druckstücke 4 vorgesehen, die beim Zusammenspannen der beiden Formhälften über entsprechende Spannbacken 5 einer nicht näher dargestellten Spritzgußvorrichtung gegen das Ende 3 der Metalleinlage 2 gedrückt werden und diese zwischen sich festklemmen.

Um die Metalleinlage 2 während des Spritzvorganges gegen eine Verlagerung innerhalb der Form 1 sichern zu können, ist an den Metalleinlagen 2 jeweils an dem dem eingespannten Ende 3 gegenüberliegenden Ende ein Zugelement 6 über eine Schwachstelle 7 angeformt, die gemäß Fig. 3 als konische Einschnürung ausgebildet ist. Da das Zugelement 6 im dargestellten Ausführungsbeispiel aus einer Verlängerung der Metalleinlage 2 besteht, wird durch die Schwachstelle 7 zwischen dem Zugelement 6 und der Metalleinlage 2 eine Verbindungsstelle erreicht, deren Zugfestigkeit geringer als die Zugfestigkeit der Metalleinlage und des Zugelementes ist, so daß die Schwachstelle 7, also die Verbindungsstelle zwischen Metalleinlage und Zugelement, eine Solltrennstelle darstellt, die bei einer Erhöhung der aufgebrachten Zugspannung über die Zugfestigkeit der Schwachstelle 7 aufbricht.

Die Zugelemente 6 sind durch Durchtrittsöffnungen 8 aus der Form 1 herausgeführt, so daß über eine Zugkraft auf die Zugelemente 6 die Metalleinlage 2, die ja mit ihrem einen Ende 3 fest eingeklemmt ist, einer Zugspannung und damit einer Richtkraft unterworfen wird, die eine Verlagerung der Metalleinlage 2 in der Form beim Einspritzen des Kunststoffes wirksam verhindert.

Um die entsprechenden Zugkräfte auf die Zugelemente 6 ausüben zu können, sind gemäß dem Ausführungsbeispiel zwei Spannzangen 9 vorgesehen, die jeweils über einen Spannkeil 10 beaufschlagt werden können, so daß das zwischen die Klemmbacken 11 der Spannzangen 9 ragende Ende der Zugelemente 6 festgeklemmt wird. Zur Betätigung der Spannkeile 10 sind nicht näher dargestellte, an einem Joch 12 befestigte Spannzylinder 20 vorgesehen. Die Zugkraft auf die Zugelemente 6 wird über das Joch 12 aufgebracht, an dem die Spannzangen 9 befestigt sind. Dieses Joch 12 ist mit einem Zylinder 13 verbunden und kann über den Zylinder 13 in Spannrichtung der Metalleinlage 2 verstellt werden. Der Verstellweg des Joches 12 ist durch Anschläge 14 nach beiden Richtungen begrenzt.

Wird nun durch eine entsprechende Beaufschlagung des Zylinders 13 über das Joch 12 und die Spannzangen 9 eine Zugkraft auf die Zugelemente 6 ausgeübt, die unter der Zugfestigkeit der Schwachstelle 7 zwischen der Metalleinlage 2 und dem Zugelement 6 liegt, so wird die Metalleinlage 2 gegen eine Verlagerung durch den in die Form 1 eindringenden Kunststoff festgehalten. Das Einspritzen des Kunststoffes über die Angußkanäle 15 kann demnach ohne Gefahr für ein Verdrängen der Metalleinlage 2 aus seiner vorgegebenen Lage durch den in die Form eindringenden Kunststoff durchgeführt werden. Vor der Beendigung des Einspritzvorganges wird die Stellkraft des Zylinders 13 durch eine entsprechend höhere Beaufschlagung über die Zugfestigkeit der Schwachstellen 7 vergrößert, so daß die Zugelemente 6 an den Schwachstellen 7 von den Metalleinlagen 2 abgetrennt und aus der Form 3 herausgezogen werden. Der den Verstellweg des Joches 12 begrenzende Anschlag 14 gewährleistet dabei, daß das abgetrennte Ende der Zugelemente 6 nach dem Rückziehweg die Durchtrittsöffnung 8 in der Form 1 bündig abschließt, wie dies der Fig. 2 entnommen werden kann. Der nachdrängende Kunststoff füllt die Form völlig aus, wobei eine Verlagerung der Metalleinlage 2 nach dem Abtrennen des Zugelementes 6 nicht mehr möglich ist, weil die Metalleinlage durch den die Form bereits fast völlig ausfüllenden Kunststoff festgehalten wird.

Nach dem Aushärten des Kunststoffes kann die Form durch eine entsprechende Bewegung der Spannbacken 5 geöffnet und das Werkstück entnommen werden, wobei zur leichteren Entnahme Auswerferstifte 16 vorgesehen sind, die beim Öffnen der Spannbacken 5 gegen das Werkstück drücken und dieses aus der Form heben.

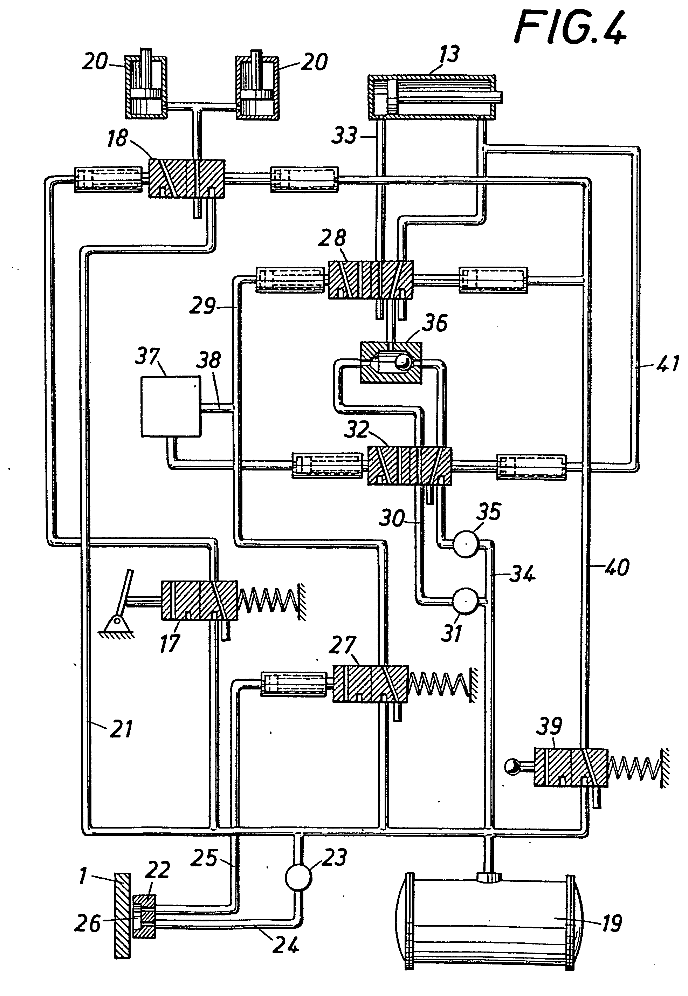

Um den richtigen Arbeitsablauf zu gewährleisten, kann eine Steuerung vorgesehen werden, wie sie beispielsweise in Fig. 4 dargestellt ist. Die pneumatische Steuerung kann selbstverständlich auch durch eine hydraulische oder elektrische Steuerung ersetzt werden, da es nicht auf die jeweiligen Steuerelemente, sondern auf den Arbeitsablauf bei der Herstellung der Brillenbügel ankommt.

Um nach dem Einlegen der Metalleinlagen 2 in die Formen 1 die Metalleinlagen spannen zu können, müssen die mit den Metalleinlagen verbundenen Zugelemente 6 an ihrem aus der Form vorragenden Ende erfaßt werden, was gemäß den Fig. 1 und 2 über Spannzangen 9 erfolgt, nicht aber notwendigerweise Spannzangen voraussetzt. Zur Beaufschlagung der Spannkeile 10 für die Spannzangen 9 wird ein Schaltventil 17 über einen Fußtaster betätigt, über das ein Steuerventil 18 von einer Druckluftquelle 19 her so beaufschlagt wird, daß die Spannzylinder 20 für die Spannkeile 10 über eine Druckleitung 21 mit der Druckluftquelle 19 verbunden werden. Die dadurch bedingte Beaufschlagung der Spannzylinder 20 hat über die Spannkeile 10 das Einspannen der Zugelemente 6 in den Spannzangen 9 zur Folge. Wird nun die Form 1 geschlossen, so wird über die Druckstücke 4 auch das nicht vom Kunststoff überdeckte Ende 3 der Metalleinlage eingeklemmt. Auf die Metalleinlage 2 kann demnach zwischen den Druckstücken 4 und der Spannzange 9 eine Zugspannung ausgeübt werden. Diese Zugspannung wird nach dem Schließen der Form automatisch aufgebracht, und zwar über eine Staudüse 22, die über ein Druckbegrenzungsventil 23 mit der Druckluftquelle 19 verbunden ist. Die Zuleitung 24 und die Ableitung 25 dieser Staudüse 22 münden in einem offenen Raum 26, der beim Schließen der Form 1 durch eine Formhälfte gasdicht abgedeckt wird, so daß die bei offenem Raum 26 aus der Zuleitung 24 ins Freie strömende Druckluft über die Ableitung 25 einem Schaltventil 27 zugeleitet wird, das bei dieser Beaufschlagung die an ein Steuerventil 28 angeschlossene Steuerleitung 29 mit der Druckluftquelle 19 verbindet. Das Steuerventil 28 wird demzufolge in seine Arbeitsstellung geschaltet, in der der Zylinder 13 zur Beaufschlagung des Joches 12 an die Druckluftquelle 19 angeschlossen wird, und zwar über eine Zweigleitung 30 mit einem Druckbegrenzungsventil 31, das den Druck der Druckluftquelle 19 so weit reduziert, daß die über den Zylinder 13 auf die Zugelemente 6 ausgeübten Zugkräfte mit Sicherheit unter der Zugfestigkeit der Schwachstelle 7 zwischen der Metalleinlage 2 und dem Zugelement liegen. Nach der durch diese Beaufschlagung des Zylinders 13 bewirkten Spannung der Metalleinlage 2 kann der Spritzvorgang eingeleitet und die Form mit Kunststoff ausgespritzt werden, da ja beim Einfüllen des Kunststoffes in die Form die Metalleinlage 2 zufolge ihrer Spannung nicht dem eindringenden Kunststoff ausweichen und aus ihrer Lage ausgebogen werden kann. Kurz bevor der Spritzvorgang beendet wird, muß die Verbindung zwischen der Metalleinlage 2 und dem Zugelement 6 durch Erhöhung der Zugspannung über die Zugfestigkeit der Schwachstelle 7 gelöst und das Zugelement aus der Form herausgezogen werden. Zu diesem Zweck ist ein Umschaltventil 32 vorgesehen, das die Speiseleitung 33 des Zylinders 13 mit einer Zweigleitung 34 verbindet, in der ein Druckbegrenzungsventil 35 für einen entsprechend höheren Beaufschlagungsdruck sorgt. Über ein Doppelrückschlagventil 36 wird der jeweils nicht benötigte Leitungsast automatisch verschlossen.

Damit das Umschaltventil 32 in Abhängigkeit vom Füllstand der Form 1 betätigt wird, kann eine wegabhängige Steuerung vorgesehen werden. Es könnte auch eine Steuerung zum Einsatz kommen, die die Betätigung des Umschaltventils 32 in Abhängigkeit vom Druck in der Form 1 steuert. Eine besonders einfache Lösung wird jedoch erhalten, wenn ein Verzögerungsschalter 37 vorgesehen wird, der eine an die Steuerleitung 29 angeschlossene Verbindungsleitung 38 zur Betätigung des Umschaltventiles 32 nach einer vorbestimmten Zeit freigibt. Da die Füllzeit der Form festliegt, kann der Zeitschalter 37 ohne Schwierigkeiten bezüglich der Verzögerungszeit so eingestellt werden, daß die erhöhte Beaufschlagung des Zylinders 13 kurz vor Beendigung des Füllvorganges erfolgt. Durch die Erhöhung des Beaufschlagungsdruckes des Zylinders 13 wird nicht nur das Zugelement von der zugehörigen Metalleinlage 2 getrennt, sondern auch das Joch 12 zurückgestellt, bis die Anschläge 14 die Verstellung beenden. In dieser Endstellung schließen die abgetrennten Enden der Zugelemente 6, wie bereits ausgeführt wurde, die Durchtrittsöffnungen 8 in der Form 1 bündig ab.

Beim Öffnen der Form 1 wird zur Rückstellung der Steuerung in ihre Ausgangslage ein Steuerventil 39 betätigt, beispielsweise über einen Hebel oder ein Gestänge, so daß die Rückstellleitung 40 an die Druckluftquelle 19 angeschlossen wird. Über die Rückstellleitung 40 werden die Steuerventile 18 und 28 in die gezeichneten Ausgangsstellungen zurückbewegt, wobei diese Rückstellung durch die Ausgangsstellung der Schaltventile 17 und 27 ermöglicht wird. Der geöffnete Raum 26 der Staudüse 22 verhindert eine Beaufschlagung des Schaltventils 27 über die Ableitung 25.

Die Rückstellung des Steuerventiles 28 hat eine Rückstellung des Zylinders 13 zur Folge und damit der mit dem Joch 12 verbundenen Spannzange 9, die durch die Rückstellung des Steuerventiles 18 geöffnet wurde. Die gegensinnige Beaufschlagung des Zylinders 13 zur Erreichung der Ausgangsstellung bedingt über den Leitungsast 41 auch eine Rückstellung des Umschaltventiles 32, so daß tatsächlich der Ausgangszustand über das Steuerventil 39 erreicht wird.

Schließlich sei noch erwähnt, daß die als Solltrennstelle ausgebildete Verbindungsstelle in äquivalenter Weise mit einer vorbestimmten Torsionsfestigkeit ausgebildet sein könnte, so daß zum Abtrennen des Zugelementes 6 von der Metalleinlage 2 das Zugelement um seine Achse verdreht werden muß.

## Ansprüche

1. Verfahren zum Herstellen von Werkstücken, insbesondere von Brillenbügeln, aus Kunststoff mit einer Metalleinlage (2), die in eine Form (1) eingelegt, an einem Ende (3) eingespannt und während des Füllens der Form (1) mit Kunststoff in dem dem eingespannten Ende (3) gegenüberliegenden Bereich in der gewünschten Lage gehalten wird, wobei diese Halterung zum vollständigen Umgeben der Metalleinlage (2) mit Kunststoff entfernt wird, dadurch gekennzeichnet, daß die Metalleinlage (2) in dem dem ein-gespannten Ende (3) gegenüberliegenden Be-reich mit wenigstens einem aus der Form (1) herausführenden Zugelement (6) verbunden und die Verbindungsstelle (7) zwischen dem Zugelement (6) und der Metalleinlage (2) als Solltrennstelle mit einer begrenzten Zug- oder Torsionsfestigkeit ausgebildet ist, daß die Metalleinlage (2) während des Einbringens des Kunststoffes in die Form (1) über das Zugelement einer Zugspannung unterworfen wird, die kleiner als die Zugfestigkeit der Verbindungsstelle (7) ist, und daß zum Lösen der Verbindungsstelle (7) entweder die aufgebrachte Zugspannung über die Zugfestigkeit der Verbindungsstelle (7) erhöht oder das Zugelement bis zum Überschreiten der Torsionsfestigkeit der Verbindungsstelle (7) gedreht wird, bevor das Zugelement (6) zum völligen Umgeben der Metalleinlage (2) mit Kunststoff aus der Form (1) gezogen wird.

2. Verfahren nach Anspruch 1, dadurch gekennzeichnet, daß das Zugelement (6) über eine Schwachstelle (7) einstückig an der Metalleinlage (2) angeformt ist.

3. Verfahren nach Anspruch 2, dadurch gekennzeichnet, daß die Schwachstelle (7) durch eine Einschnürung gebildet wird.

4. Verfahren nach einem der Ansprüche 1 bis 3, dadurch gekennzeichnet, daß nach dem Zurückziehen des Zugelementes (6) aus der Form (1) das abgetrennte Ende des Zugelementes (6) die Durchtrittsöffnung (8) des Zugelementes (6) in der Form (1) bündig abschließt.

## Claims

1. A process of making workpieces, particularly spectacle bows, consisting of plastics material and a metal insert (2), which is placed into a mould (1) and gripped at one end (3) and during the filling of the mould (1) with plastics material is held in the desired position at that portion which is opposite to the gripped end (3), which holding is removed for a complete surrounding of the metal insert (2) with plastics material, characterized in that that portion of the metal insert (2) which is opposite to the gripped end (3) is connected to at least one tensile element (6), which extends out of the mould (1), and the joint (7) between the tensile element (6) and the metal insert (2) is designed as a rated break point having a limited ultimate tensile stress or ultimate torsional stress, that during the introduction of the plastics material into the mould (1) the metal insert (2) is subjected by means of the tensile element to a tensile stress which is lower than the ultimate tensile stress of the joint (7), and that the joint (7) is broken either in that the tensile stress applied is increased beyond the ultimate tensile stress of the joint (7) or the tensile element is twisted until the ultimate torsional stress of the joint (7) is exceeded, before the tensile element (6) is pulled out of the mould (1) so that the metal insert (2) is completely surrounded by plastics material.

2. A process according to claim 1, characterized in that the tensile element (6) is integrally formed with the metal insert (2) and connected to it by a weak section (7).

3. A process according to claim 2, characterized in that the weak section (7) is constituted by a constriction.

4. A process according to any of claims 1 to 3, characterized in that the severed end of the tensile element (6) is flush with and closes the opening (8) formed in the mould (1) as the passage for the tensile element (6) when the latter has been retracted from the mould (1).

## Revendications

1. Procédé de fabrication de pièces, en particulier de branches de lunettes, en matière synthétique avec une armature métallique (2) que l'on insère dans un moule (1), que l'on enserre à une extrémité (3) et que l'on maintient dans la position désirée, dans la région opposée à l'extrémité enserrée (3) pendant que l'on remplit le moule (1) de matière synthétique, ce maintien étant supprimé pour entourer complètement l'armature métallique (2) de matière synthétique, caractérisé par le fait que l'armature métallique (2) est reliée, dans la région opposée à l'extrémité enserrée (3), à au moins un élément de traction (6) sortant du moule (1) et le point de liaison (7) entre l'élément de traction (6) et l'armature métallique (2) étant constitué sous forme de point de séparation obligatoire ayant une résistance limitée à la traction ou à la torsion, que pendant l'introduction de la matière synthétique dans le moule (1), on soumet l'armature métallique (2), par l'intermédiaire de l'élément de traction, à une contrainte de traction qui est inférieure à la résistance à la traction du point de liaison (7) et que pour détacher le point de liaison (7), ou bien on augmente la contrainte de traction appliquée au dessus de la résistance à la traction du point de liaison (7), ou bien on fait tourner l'élément de traction jusqu'à dépasser la résistance à la torsion du point de liaison (7) avant de retirer du moule (1) l'élément de traction (6) pour entourer complètement l'armature métallique (2) de matière synthétique.

2. Procédé selon la revendication 1, caractérisé par le fait que l'élément de traction (6) est formé d'une seule pièce sur l'armature métallique (2) par l'intermédiaire d'un point faible (7).

3. Procédé selon la revendication 2, caractérisé par le fait que le point faible (7) est formé par un rétrécissement.

4. Procédé selon l'une des revendications 1 à 3, caractérisé par le fait qu'une fois que l'élément de traction (6) a été retiré du moule (1), l'extrémité séparée de l'élément de traction (6) ferme, en affleurant, l'ouverture de passage (8) de l'élément de traction (6) dans le moule (1).

FIG.1

FIG.2

FIG.3

0 030 931

FIG.4

0 030 931